# EUROPEAN PATENT APPLICATION

(11) **EP 2 148 017 A2**
(43) Date of publication of application: **27.01.2010**
(21) Application number: 09380140.5
(22) Date of filing: 23.07.2009
(51) Int. Cl.: E03F 5/04, A47K 3/40, E04B 1/348

(54) **Shower system accessible to people with reduced mobility, and associated piping**

(30) Priority: 24.07.2008 ES 200802205 P
(71) Applicant: Osoa Proiektuak, S.L., 20003 Donostia Guipuzcoa (ES); Arrieta Zubillaga, Koldo, 20159 Asteasu Guipuzcoa (ES)
(72) Inventor: Odriozola Sagastume, Jabier, 20003 Donostia (Gipuzkoa) (ES)
(74) Representative: Urteaga Simarro, José Antonio

(57) **Abstract**

Shower system accessible to people with reduced mobility, which comprises a sloping shower floor (1), water collection channel (2), water transport channel (3) and a drain trap element (4), wherein the channels (2, 3) are embedded in the surface of the bathroom floor and are substantially at constant level. This shower system is especially useful for remodeling bathrooms in which there is a very small difference in level between the shower floor (1) and the connection (E) to the general drainage pipe system (F), as it allows water to be transported without losing height from the shower floor (1) to a point closer to the general drainage pipe system (F), after which conventional plumbing pipes can be used. Suitable channels (2, 3) are also proposed.

## Description

### Technical field

The invention refers to a bathroom shower system that can be accessed by people with reduced mobility in general, and by persons in wheelchairs in particular. The invention also refers to a piping that is especially suitable for said shower system.

### Prior art

The aim of modem-day social policies is to enable persons with physical disabilities to live in their habitual place of residence for as long as possible, without having to resort to exceptional measures such as staying in residential homes.

To enable persons with physical disabilities to perform everyday tasks independently, these tasks being defmed as basic and fundamental ones such getting out of bed, cooking or taking a shower, their environment has to be adapted, starting with the house in which they live.

Nowadays, in the case of many remodelling made in buildings at this moment in time it is not possible to install showers that are level with floor (i.e., which do not have a step). This has serious consequences as it restricts or prevents people with reduced mobility (for example, wheelchair users) from using showers.

The bathroom is, in fact, one of the most difficult parts of the house in which to create an accessible environment that increases the degree of independence of persons with physical disabilities. This is due to the fact that bathrooms are usually small in size and contain a large number of fixtures (lavatory, bidet, washbasin, bathtub, shower tray, etc.). Due to its very nature as a room in which water is used and where said water must be allowed to escape from its areas of use, bathrooms must also feature some type of water barrier that, unfortunately, usually also acts as a barrier to persons with reduced mobility.

Drainage systems used to date generally comprise the following elements:
A) A water collection area, e.g. a shower tray.
B) Piping to the drain trap.
C) A drain trap.
D) Transport means from the drain trap to the connection with the general drainage pipe system.
E) A connection with the general drainage pipe system.

Up to now the water collection system (unit formed by A, B and C) has generally been built in the shower area. Then, the water has been borne to the connection with the general drainage pipe system (F) through transport means (D) formed by embedded pipes, sufficiently tilted so that the water is able to run. Occasionally, the difference in height between the drain trap (C) and the connection with the general drainage pipe system (F) is not great enough to provide the transport means (D) with the necessary inclination. In such cases the water collection system (A, B, C) must be raised. This presents two major drawbacks, however. Firstly, the water collection system (A, B, C) is raised so that it is accessible by successive ramps, which is usually not acceptable for the vast majority of people with reduced mobility as it converts the bathroom into an unusable space. Secondly, it would require breaking the bathroom floor structure all the way along the transport means (D), which may weaken the structure of the bathroom.

With regard to the water collection area or shower tray, the prior art contains multiple known designs that aim to remove any access steps to said area so that the shower is completely accessible to people with reduced mobility (to people in wheelchairs in particular). For example, document GB2402059 describes a shower tray surrounded all the way around its perimeter by recessed drainage channel and provided with internal drainage channels that drain into the perimetrical drainage channel. The perimetrical drainage channel may be tilted towards a drainage point located in the shower tray. However, this shower tray cannot be installed in some cases as it requires that the water collection system (A, B, C) is positioned at a level that is sufficiently higher than the level of the connection (E) so that the drain trap (C) to be placed at a sufficiently high level and provide the transport means (D) with a sufficient slope. If it is to be used for remodelling a bathroom in which the connection (E) is located at a relatively large height and far from the shower area, then, because the water in the drain trap (C) drops significantly, the water collection area (A) will have to be lifted in order to enable the water to be transported at a sufficient tilt from the water collection area (A) to the general drainage pipe system (F). Rising the water collection area (A) would mean having to build a step.

Document US5903937 is also known and refers to a bathroom module with two different floor areas, one of them wet and corresponding to the shower area and the other dry and corresponding to the area of the lavatory, washbasin, etc. The first area is tilted towards the second area and ends in a drainage channel, which is connected in turn to a drain. This solution does not solve the problem as it requires that, prior to breaking up the bathroom floor, the level of the water collection system (A, B, C) is sufficiently high to allow the water to be carried via the transport means (D) to the connection (E).

In short, there is a technical problem that has yet to be resolved satisfactorily, which arises when remodelling showers that have the following characteristics: firstly, the relative height between the connection (E) with the general drainage pipe system (F) and water collection system (A, B, C) is not large enough; secondly, the connection (E) is far away from the place where the water collection area (A) is to be situated. The problem is that, under these conditions, conventional solutions require that the water collection system (A, B, C) be raised, ramps be built and the floor structure broken.

It is an objective of the invention to provide an accessible shower system that may be used in bathroom remodelling, and which effectively resolves the aforementioned problem.

### Brief disclosure of the invention

It is an object of the invention to provide a shower system accessible to people with reduced mobility, which comprises a shower floor that is sloped towards the shower entrance area, a water collection channel located in at least the shower entrance area, and a water transport channel running from the water collection channel to a drain trap element. Both the water collection channel and the water transport channel are visible, in other words they are embedded in the surface of the bathroom floor. The water collection channel and the water transport channel do not present a substantial drop or slope. The difference in height between them can range from zero to a few millimetres per metre, in no circumstances it being comparable to the 2 cm per metre that a conventional plumbing pipe must present in order to allow water to flow correctly.

The system described enables water to be transported without a substantial drop to a relatively-far point that is close enough to the general drainage pipe system to allow, from said point on, to install a standard inclined plumbing pipe all the way to the general drainage pipe system. The system's drain trap element will be located at said relatively-far point. In other words the inventive shower system enables the drain trap element to be moved closer to the general drainage pipe system without the water substantially losing height, thereby enabling conventional sloped pipes to be installed after the drain trap element. Remodeling can thus be made without having to raise the shower floor in bathrooms characterised by the shower floor and the connection with the general drainage pipe system being relatively too close in height and too far in horizontal distance. Nor is it necessary to break up the floor in a longitudinal direction, as the channels is positioned above the floor structure.

It is also an abject of the invention to provide a method for draining the water out of an accessible shower system installed in a bathroom, said method comprising the steps of driving water along a downwardly sloped shower floor towards the shower entrance area, collecting water in a water collection channel embedded in the bathroom floor surface, said water collection channel having a substantially constant water level and being located at least in the shopwer entrance area, and transporting the water along a water transport channel to a drain trap element connected to the general drainage pipe system, said water transport channel being embedded in the bathroom floor surface and having a substantially constant water level.

It is a further object of this invention to provide a water channel that comprises an elongated body in the form of a conduit and capable of being cut at a certain length, and at least one separate cover capable of being connected to the ends of the body after it has been cut, to close off the ends of the pipe. The water channel allows for a reduction in the time it takes to complete the bathroom remodeling, as it may easily be cut in situ after the section to be covered has been measured and the necessary length of the water channel has been calculated. As a result, there is no need to order a commercial water channel with the required measurement and wait for said water channel to be manufactured, thereby reducing the time it takes to carry out the bathroom remodeling.

### Brief description of the drawings

Details of the invention can be seen in the accompanying non-limiting figures:
- Figure 1 shows a conventional shower system.
- Figure 2 shows a side view of the system in Figure 1.
- Figure 3 shows another conventional shower system.
- Figure 4 shows a side view of the system in Figure 3.
- Figure 5 shows another conventional shower system.
- Figure 6 shows a side view of the system in Figure 5.
- Figure 7 shows the breakage of the floor structure of the system in Figure 5.
- Figure 8 shows an embodiment of the inventive shower system.
- Figure 9 shows a side view of the system in Figure 8.
- Figure 10 shows another embodiment of the inventive shower system.
- Figure 11 shows a side view of the system in Figure 9.
- Figure 12 shows a first embodiment of the inventive water channel.
- Figure 13 shows a second embodiment of the inventive water channel.
- Figure 14 shows a third embodiment of the inventive water channel.
- Figure 15 shows a side view of the water channelof the preceding figure.
- Figure 16 shows a fourth embodiment of the inventive water channel.
- Figure 17 shows an embodiment of the cover of the inventive water channel.
- Figure 18 shows an embodiment of a connection part for connecting several bodies of the inventive water channel.

### Detailed disclosure of the invention

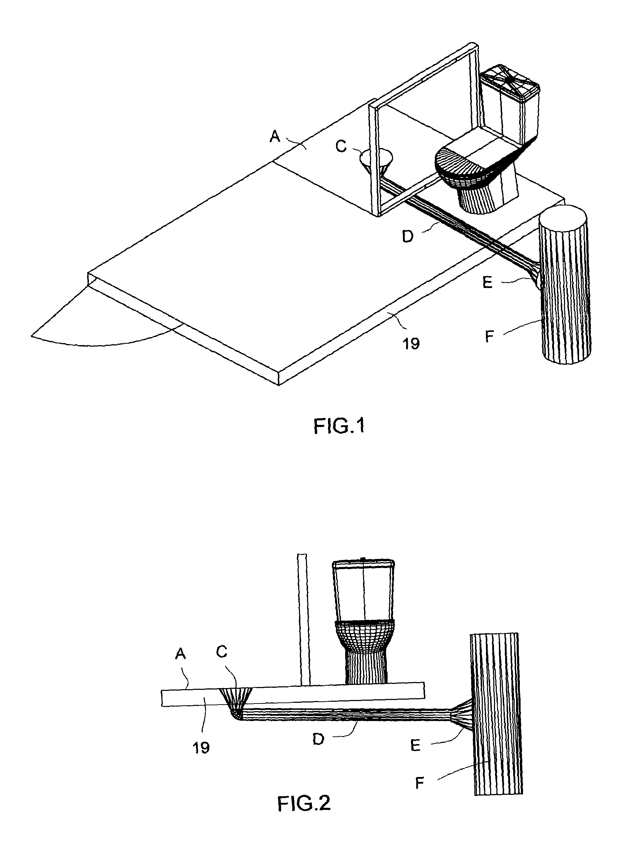

Figures 1 and 2 show an example of a conventional shower system, which comprises a water collection area or shower tray (A), a drain trap (C) located beneath the centre of the shower tray (A), transport means (D) for transporting the water collected by the drain trap (C) towards the general drainage pipe system (F), and a connection (E) to said general drainage pipe system (F). In this example, as can be seen in Figure 2, there is enough difference in level between the water collection system (A, C) and the connection (E), thus making it possible, without any difficulty, to provide the transport means (D) with the necessary slope to transport the water.As shown, said transport means (D) are located beneath the structure (19) of the bathroom floor.

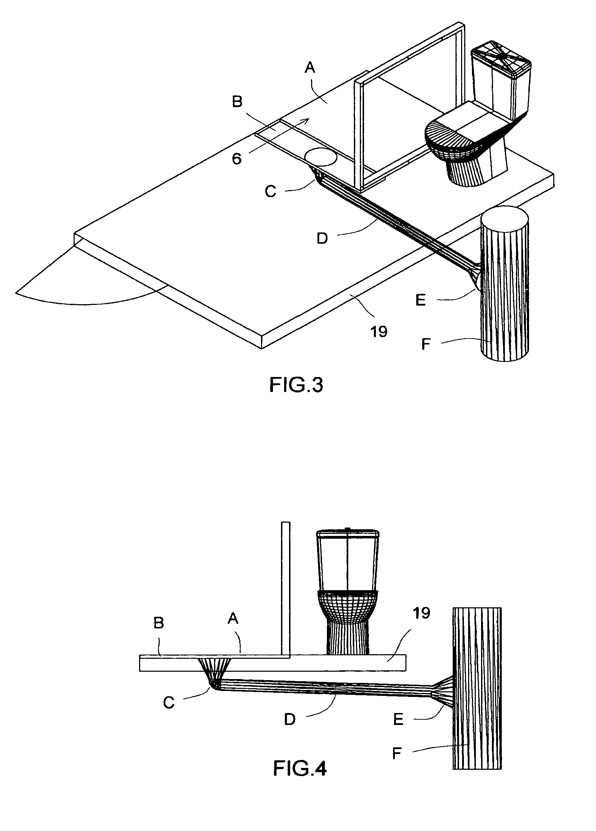

Figures 3 and 4 show a second example of a conventional shower system, which comprises a water collection area or shower tray (A), a water channel (B), a drain trap (C) located beneath the shower entrance area (6), transport means (D) for transporting the water collected by the drain trap (C) towards the general drainage pipe system (F), and a connection (E) to said general drainage pipe system (F). In this example, as can be seen in Figure 4, there is also enough difference in level between the water collection system (A, B, C) and the connection (E), thus making it possible, without any difficulty, to provide the transport means (D) with the necessary slope to transport the water. As with the preceding example, said transport means (D) are also located beneath the structure (19) of the bathroom floor.

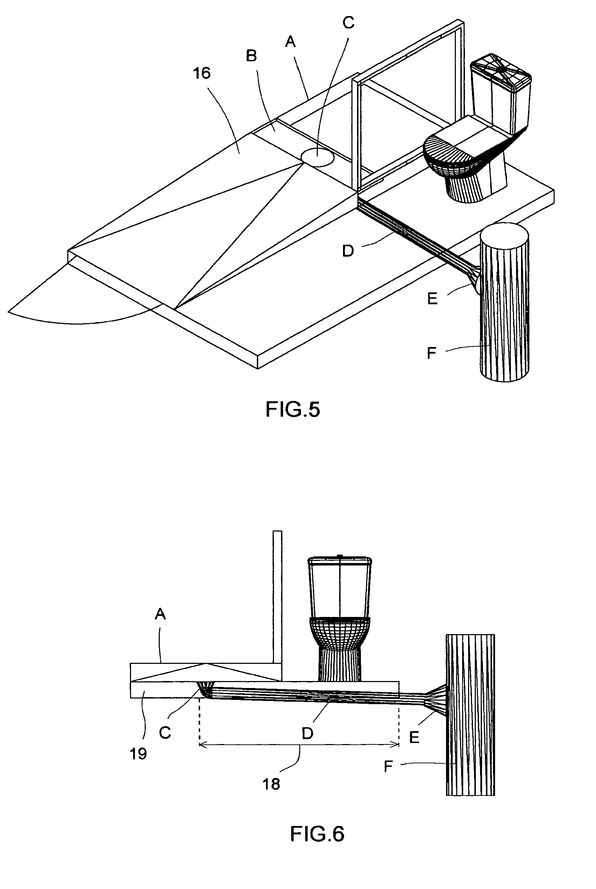

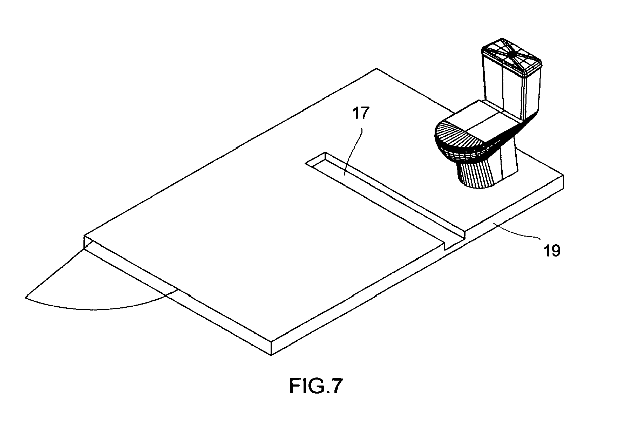

Figures 5, 6 and 7 show a third example of a conventional shower system, which comprises a water collection area or shower tray (A), a water channel (B), a drain trap (C) located beneath the shower entrance area (6), transport means (D) for transporting the water collected by the drain trap (C) towards the general drainage pipe system (F), and a connection (E) to said general drainage pipe system (F). In this example, as can be seen in Figure 6, the bathroom is characterised by the fact that there is not a sufficient difference in height between the water collection system (A, B, C) and the connection (E) to provide the transport means (D) with the necessary slope to transport the water. Thus, during remodelingit is necessary to raise the water collection system (A, B, C), therefore requiring the construction of a ramp (16). The ramp (16) unfortunately, in a long term, makes the bathroom less usable. Additionally, it is also necessary to break the floor structure, as shown in the breakage (17) detailed in Figure 7, all the way along the area of intersection (18) between the structure (19) and the transport means (D). Such breakage of the structure is not acceptable from a technical standpoint as it weakens the floor structure.

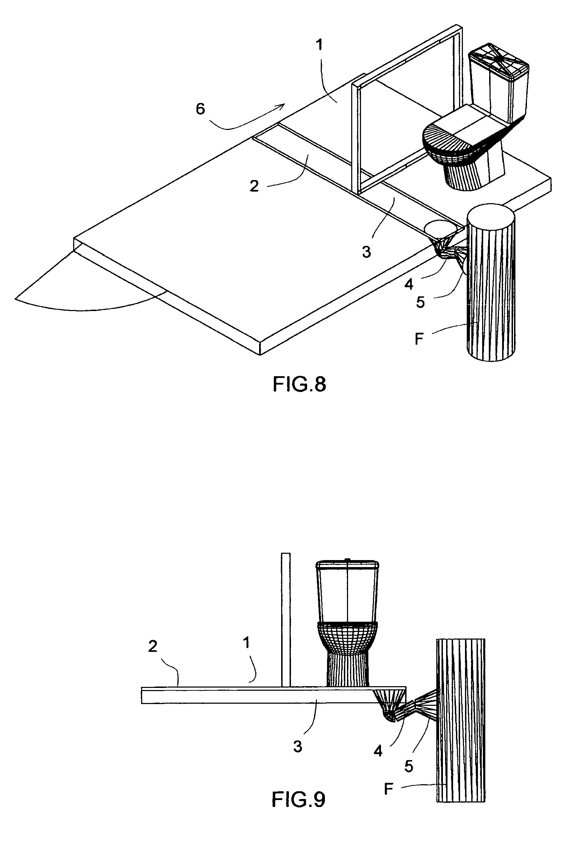

Figures 8 and 9 show an embodiment of the inventive shower system. The shower system is connected to the general drainage pipe system (F) and comprises the following elements: a shower floor (1) which may be accessed by a shower entrance area (6) and which slopes downwardly towards said shower entrance area (6); a drain trap element (4) located next to the general drainage pipe system (F); a water collection channel (2) located at least in the access area (6); and a water transport channel (3) running from the water collection channel (2) to the drain trap element (4). Both the water collection channel (2) and the water transport channel (3) are visible. Both channels provide a substantially constant water level (i.e., are substantially not inclined), allowing the drain trap element (4) to be positioned closer to the general drainage pipe system (F) without the water substantially losing height. A conventional drainage tube (5) is then located between the drain trap element (4) and the general drainage pipe system (F).

The invention offers an additional advantage in that the water collection channel (2) acts as a barrier against the water that accumulates on the shower floor (1) but does not represent a barrier preventing the access of people with reduced mobility.

The drain trap element (4) may present many different embodiments provided that it guarantees that the water that travels through the water collection channel (2) and the water transport channel (3) is drained off by the drain trap element (4) to the drainage tube (5) according to the physical principle of communicating vessels. For example, the drain trap element (4) may be a commercial drain trap, a set of bends correctly assembled together, etc.

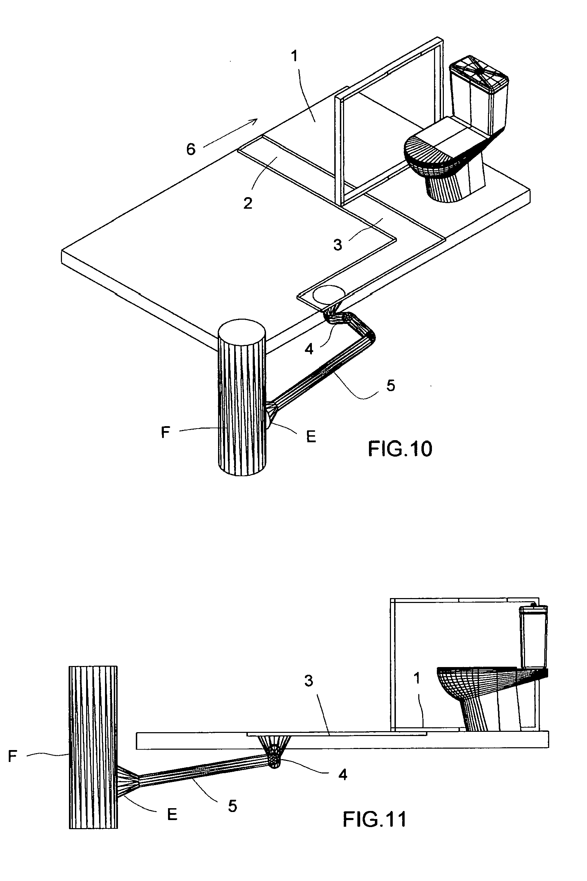

Figures 10 and 11 show a second embodiment of the inventive shower system. In this case, the shower system comprises an L-shaped water transport channel (3), which transports the water from the water collection channel (2) to the drain trap element (4). The drain trap element (4) is positioned at a certain distance from the general drainage pipe system (F), but still close enough so that, even if there is little difference in the level between the connection (E) and the channels (2, 3), it is possible to install a conventional sloped drainage tube (5). In other words the inventive shower system allows the drain trap element (4) to be brought closer to the general drainage pipe system (F) without the water substantially losing height, therefore allowing conventional sloped drainage tubes to be connected from the drain trap element (4) on (said conventional drainage tubes being usually non-expensive).

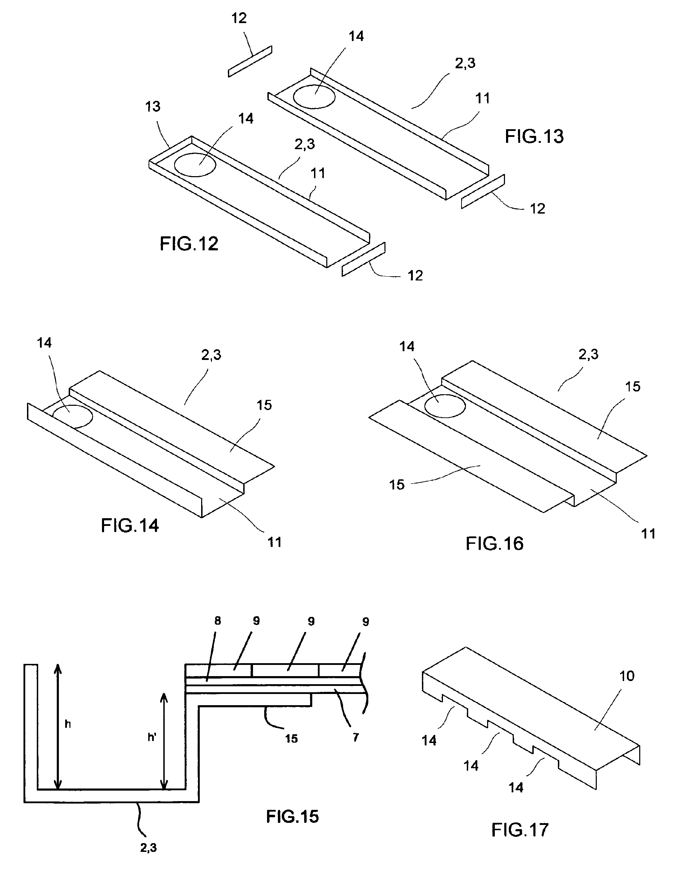

In order to produce a water collection channel (2) and/or water transport channel (3) such as the ones described above, the invention proposes an optimal water channel design that allows to reduce total bathroom remodeling time. The inventive channel (2, 3) comprises an elongated body (11) in the form of a conduit and capable of being cut to a certain length and at least one separate cover (12) capable of being connected to the ends of the body (11) after it has been cut. By way of example, Figure 12 shows a channel (2, 3) provided with a single separate cover (12) and a fixed cover (13), the latter closing off the end of the body (11) towards which the water moves. Figure 13 shows a second embodiment in which the channel (2, 3) is provided with two separate covers (12).

Optionally, the body (11) of the channel (2, 3) comprises at least one side flap (15), which is designed to be covered by a floor covering and/or sealant. A channel (2, 3) with a single side flap (15) (the one shown in Figure 14 for example) is generally used when, instead of fully remodeling the bathroom to install the system, only a cut is made in the floor tiles in order to install the channel (2, 3). A channel (2, 3) with a double side flap (15) (the one shown in Figure 16 for example) is generally used the bathroom is fully remodeled and it is essential that the channel (2, 3) is sealed completely.

As shown in Figure 15, in the case of channels (2, 3) provided with a single side flap (15), the height (h) of the side that does not have a flap is higher than the height (h') of the side with a side flap (15). The purpose of this particular feature is to ensure that the total height comprised by the height (h') of the side with a side flap (15), the height of a layer of sealant (7), a layer of tile adhesive (8) and a layer of tiles (9) is equal to the height (h) of the other side. This ensures that the tiles (9) on the side with a side flap (15) are at the same level as the opposite side.

Preferably, the inventive channel (2, 3) also comprises a cover (10) that covers the body (11) and which presents an inverted U-shaped cross-section, as shown in Figure 17. Said cover (10) allows the channel to appear leveled and flat with respect to the floor of the bathroom, allowing users to easy and comfortably pass over it with wheelchairs, crutches, etc. Optionally, the cover (10) also comprises holes (14) formed in at least one of its sides. Said holes (14) improve the channel's performance with soapy water as they enable soapy water to pass straight through the centre of the channel (2, 3) and not stop in the narrow gap between the end of the channel (2, 3) and the cover (10). It must be pointed out that if soapy water does not pass quickly through said narrow gap, the bubbles could in some cases exceed the level of the channel (2, 3).

The channel (2, 3), which as stated above is elongated, may be straight, angled, curved, etc.

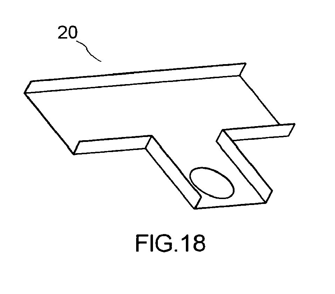

Figure 18 shows an embodiment of a connection part (20) that allows connecting several water channel bodies (11). Said connection part (20) can be T-shaped, as shown (to connect three bodies, generally), L-shaped (to connect two bodies at a certain angle), or shaped in any other applicable way.

It is also an abject of the invention to provide a method for draining the water out of a bathroom shower system designed for people with reduced mobility, where the water is drained out of the shower and into the general drainage pipe system (F) of the bathroom. Said shower system comprises a shower floor (1) which is accessed via a shower entrace area (6). The method comprises the steps of:
- driving water along a downwardly sloped shower floor (1) towards the shower entrance area (6),
- collecting water in a water collection channel (2) embedded in the bathroom floor surface, said water collection channel (2) having a substantially constant water level and being located at least in the shopwer entrance area (6), and
- transporting the water along a water transport channel (3) to a drain trap element (4) connected to the general drainage pipe system (F), said water transport channel (3) being embedded in the bathroom floor surface and having a substantially constant water level.

The connection between the drain trap element (4) and the general drainage pipe system (F) can be direct or indirect. Preferable, the method of the invention comprises the additional step of transporting water along a fully-embedded drainage tube (5) from the drain trap element (4) to the general drainage pipe system (F).

## Claims

1. Shower system accessible to people with reduced mobility, which comprises a shower floor (1) that may be accessed by a shower entrance area (6), and a drain trap element (4), and which is connected to the general drainage pipe system (F), **characterised in that:**
- the shower floor (1) slopes towards the shower entrance area (6),
- the shower system also comprises a water collection channel (2) located in at least the shower entrance area (6), and a water transport channel (3) that runs from the water collection channel (2) to a drain trap element (4), where
- the water collection channel (2) and the water transport channel (3) are embedded in the surface of the bathroom floor and have a substantially constant water level.

2. Shower system according to claim 1, wherein it also comprises a fully embedded drainage tube (5), for transporting the water from the drain trap element (4) to the general drainage pipe system (F).

3. Method for draining the water out of a bathroom shower system designed for people with reduced mobility, where the water is drained out of the shower and into the general drainage pipe system (F) of a bathroom, said shower system comprising a shower floor (1) which is accessed via a shower entrace area (6), the method comprising the steps of:
- driving water along a downwardly sloped shower floor (1) towards the shower entrance area (6),
- collecting water in a water collection channel (2) embedded in the bathroom floor surface, said water collection channel (2) having a substantially constant water level and being located at least in the shopwer entrance area (6), and
- transporting the water along a water transport channel (3) to a drain trap element (4) connected to the general drainage pipe system (F), said water transport channel (3) being embedded in the bathroom floor surface and having a substantially constant water level.

4. Method according to claim 3, comprising the additional step of transporting water along a fully-embedded drainage tube (5) from the drain trap element (4) to the general drainage pipe system (F).

5. Water channel (2, 3) for a shower system according to claims 1 or 2, wherein it comprises an elongated body (11) that is straight, curved or of another shape, in the form of a conduit and capable of being cut to a certain length.

6. Water channel (2, 3) according to claim 5, also comprising at least one separate cover (12) capable of being connected to the ends of the body (11) after it has been cut.

7. Water channel (2, 3) according to claim 5, also comprising a cover (10) that covers the body (11) and which presents a U-shaped cross-section.

8. Water channel (2, 3) according to claim 6, wherein the cover (10) comprises holes (14) formed in at least one of its sides.

9. Water channel (2, 3) according to claim 6, wherein the body (11) comprises at least one side flap (15).

10. Water channel (2, 3) according to claim 9, wherein the body (11) comprises one side flap (15), and wherein the height (h) of the side that does not have the flap is greater than the height (h') of the side with the side flap (15).

11. Water channel (2, 3) according to claim 5, wherein it has no drop or slope.

12. Water channel (2, 3) according to claim 5, wherein it presents a drop or slope.

13. Water channel (2, 3) according to claim 12, wherein it comprises a fixed cover (13) that closes off the end of the body (11) with the lower height and towards which the water moves.

14. Water channel (2, 3) according to claim 5, further comprising a connection part (20) that allows connecting several bodies (11).
